# EUROPÄISCHE PATENTSCHRIFT

(11) **EP 2 553 306 B1**
(45) Veröffentlichungstag und Bekanntmachung des Hinweises auf die Patenterteilung: **05.03.2014**
(21) Anmeldenummer: 11701606.3
(22) Anmeldetag: 04.01.2011
(51) Int. Cl.: F16L 11/11, F16L 11/20

(54) **FLEXIBLER WASSERSCHLAUCH**
FLEXIBLE WATER HOSE
TUYAU D'EAU FLEXIBLE

(30) Priorität: 31.03.2010 DE 202010004398 U
(43) Veröffentlichungstag der Anmeldung: 06.02.2013
(73) Patentinhaber: Neoperl GmbH, 79379 Müllheim (DE)
(72) Erfinder: MAGER, Kevin, 79379 Müllheim (DE)
(74) Vertreter: Börjes-Pestalozza, Heinrich
(86) Internationale Anmeldenummer: PCT/EP2011/000006
(87) Internationale Veröffentlichungsnummer: WO 2011/120605

(56) Entgegenhaltungen:
- EP-A1- 2 000 723
- DE-U1- 20 314 718
- DE-U1-202008 012 024
- DE-U1-202008 016 168
- GB-A- 965 282
- US-B1- 6 192 940

## Beschreibung

Die Erfindung betrifft einen flexiblen Wasserschlauch mit einer Schlauchseele oder dergleichen Innenschlauch, der aus einem PVC-freien Kunststoffmaterial hergestellt ist und der eine wendel- oder wellenförmige Schlauchkontur hat, mit einer Schlauchumhüllung, welche den Schlauchaußenumfang des Wasserschlauches bildet, sowie mit zumindest einer Schlauchzwischenlage, die zwischen der Schlauchseele oder dergleichen Innenschlauch und der Schlauchumhüllung vorgesehen ist, wobei die zumindest eine Schlauchzwischenlage sich mit ihrer Innenumfangswandung bis in die außenumfangsseitigen Einformungen der wendel- oder wellenförmigen Kontur der innenumfangsseitig benachbarten Schlauchschicht derart erstreckt, dass sie die Einformungen ausfüllt.

Man kennt bereits flexible Wasserschläuche, die im Verlauf einer sanitären Wasser- oder Abwasserleitung als flexibler Leitungsabschnitt vorgesehen sind. Die vorbekannten Wasserschläuche weisen eine wasserführende Schlauchseele oder dergleichen Innenschlauch auf, welche Schlauchseele aus Polyvenylchlorid (PVC) hergestellt ist und eine wendel- oder wellenförmige Schlauchkontur hat. Der Außenumfang dieser vorbekannten Wasserschläuche wird durch eine Schlauchumhüllung gebildet, die wegen ästhetischer Gründe und/oder wegen Stabilitätsgründen aus einem Metallgeflecht oder einem transparenten beziehungsweise eingefärbten Kunststoffmaterial hergestellt sein kann. Die vorbekannten Wasserschläuche sind zwar aufgrund der Wendel- oder Wellenkontur ihrer Schlauchseele hochflexibel, jedoch ist das dafür verwendete PVC-Material ökologisch bedenklich. Das verwendete PVC-Material enthält nicht nur Weichmacher, die mit der Zeit in das Trinkwasser übergehen, - vielmehr enthält das verwendete PVC-Material auch Chlorverbindungen, die im Brandfall zu einer giftigen Rauchentwicklung führen können. Darüber hinaus ist das verwendete PVC-Material anfällig für einen oberflächlichen Befall mit Mikroorganismen, die ebenfalls zu einer unerwünschten Kontamination des Trinkwassers führen können.

Aus der GB 965 282 A ist bereits ein flexibler Wasserschlauch der eingangs erwähnten Art mit einer Schlauchseele vorbekannt, die eine wendel- oder wellenförmige Schlauchkontur hat. Die Schlauchseele ist aus einem aus Polyethylen bestehenden Kunststoffstreifen gebildet, der derart wendelförmig in Längsrichtung des Schlauches gewickelt ist, dass sich die aneinander angrenzenden Umwicklungen hälftig überlappen und im Längsschnitt der Schlauchseele einen mehrlagigen Schlauchseelen-Aufbau ergeben. Die derart mehrlagige Schlauchseele ist von einer extrudierten Kunststoffschicht umhüllt, welche die sich durch die Wendelstruktur ergebenden Einformungen der Schlauchseele ausfüllt und eine außenseitig glattwandige Schlauchzwischenlage bildet. Auf Seite 1, Zeilen 61 bis 64 der GB 965 282 A ist erwähnt, dass diese Schlauchzwischenlage von einer verstärkenden Schlauchschicht umhüllt und dass diese Schlauchumhüllung als umhüllendes Metallgeflecht ausgestaltet sein kann. Dabei ist die die Schlauchzwischenlage bildende Kunststoffschicht aus Polyvenylchlorid hergestellt.

Da der vorbekannte Schlauch eine Schlauchseele hat, die aus einander wendelförmig überlappenden und miteinander verklebten Umwicklungen eines Kunststoffstreifens gebildet ist, ist bei diesem Schlauch nur eine im Vergleich zur Schlauchdicke reduzierte Flexibilität des Schlauches zu erwarten.

Aus der DE 20 2008 016 168 U1 ist bereits ein Wasserschlauch vorbekannt, der zum Anschließen von Sanitärarmaturen oder zum Verbinden von Teilen des wasserführenden Systems bestimmt ist. Der vorbekannte Wasserschlauch weist eine Schlauchseele auf, die von einem Wellschlauch aus Polyethylen gebildet ist. Die Schlauchseele ist von einer Außenummantelung umgeben, die zum Beispiel als Spiralwendel aus einem Metallband gebildet sein kann. Der vorbekannte Wasserschlauch soll die hohe Flexibilität des als Schlauchseele dienenden Wellschlauches mit dem Knickschutz einer metallenen Spiralwendel verbinden. Nachteilig ist jedoch, dass die, sich in Längsrichtung wiederholt kreuzenden Einformungen des Wellschlauches einerseits und der Spiralwendel andererseits unbeabsichtigt derart ineinander greifen können, dass die Oberflächenstrukturen des Wellschlauchs und der Spiralwendel einander beeinträchtigen und der angestrebten Flexibilität des vorbekannten Wasserschlauches in Teilbereichen unkontrolliert entgegenwirken.

Aus der DE 20 2008 012 024 U1 kennt man bereits einen Wasserschlauch, dessen Schlauchseele als ein aus Polyethylen hergestelltes Mono-Wellrohr ausgestaltet ist. Die Schlauchseele ist von einer Schutzhülle umgeben, die im Extrusionsverfahren aus Evathane oder einem anderen weichen Polymer hergestellt ist. Der vorbekannte Wasserschlauch zeichnet sich durch seine hohe Flexibilität aus, - jedoch besteht die Gefahr, dass der vorbekannte Wasserschlauch insbesondere an den Einformungen seines als Schlauchseele dienenden Wellrohres derart einknickt, dass die Wasserzufuhr behindert oder gar unterbrochen sein kann.

In der DE 203 14 718 U1 ist bereits ein Wasserschlauch vorbeschrieben, dessen als Wellrohr ausgebildete Schlauchseele von einem Nylongewebe als Außenmantel umgeben ist, welcher Außenmantel mechanisch stabilisierend wirken soll. Die Herstellung eines solchen Nylongewebes und dessen Aufbringen auf die Schlauchseele ist aber mit einem überdurchschnittlich hohen Aufwand verbunden.

Es besteht daher die Aufgabe, einen flexiblen Wasserschlauch der eingangs erwähnten Art zu schaffen, der die Nachteile des vorbekannten Standes der Technik zumindest weitestgehend vermeidet und der auch hohen hygienischen Ansprüchen genügt.

Die erfindungsgemäße Lösung dieser Aufgabe besteht bei dem Wasserschlauch der eingangs erwähnten Art insbesondere darin, dass die zumindest eine Schlauchzwischenlage eine im wesentlichen glattwandige Außenumfangswandung hat, und dass die Schlauchseele oder dergleichen Innenschlauch und die zumindest eine Schlauchzwischenlage von einer wendel- oder wellenförmigen Verstärkung umhüllt ist, welche zwischen der zumindest einen Schlauchzwischenlage und der Schlauchumhüllung vorgesehen ist.

Der erfindungsgemäße Wasserschlauch weist eine Schlauchseele oder dergleichen Innenschlauch auf, wobei die Schlauchseele aus einem PVC-freien Kunststoffmaterial hergestellt ist. Da die wasserführende Schlauchseele des erfindungsgemäßen Wasserschlauchs aus einem PVC-freien Kunststoffmaterial hergestellt ist, zeichnet sich der erfindungsgemäße Wasserschlauch dadurch aus, dass er auch hohen hygienischen Ansprüchen entspricht. Durch den Einsatz einer aus PVC-freiem Kunststoffmaterial hergestellten Schlauchseele wird ein oberflächlicher Befall der Schlauchseele durch Mikroorganismen entgegengewirkt und ein Eintrag von Weichmachern in das Trinkwasser vermieden. Da auch bei dem erfindungsgemäßen wasserschlauch die Schlauchseele eine wendel- oder wellenförmige Schlauchkontur hat, ist der erfindungsgemäße Wasserschlauch hochflexibel, ohne dass ein Abknicken der Wasserleitung in diesem Bereich und eine dadurch verursachte Geräuschbildung im Leitungssystem oder eine beginnende Schädigung des Schlauch befürchtet werden müsste. Da die mit einer wendeloder wellenförmigen Schlauchkontur ausgestattete Schlauchseele von einer Schlauchumhüllung umhüllt ist, welche den Schlauchaußenumfang des Wasserschlauchs bildet, wird einer erwünschten Verschmutzung des Wasserschlauchs am Wasserschlauchaußenumfang im Bereich der durch die wendel- oder wellenförmige Schlauchkontur gebildeten Einformungen weitestgehend vermieden.

Da zwischen der Schlauchseele oder dergleichen Innenschlauch und der Schlauchumhüllung zumindest eine Schlauchzwischenlage vorgesehen ist, ist der erfindungsgemäße Wasserschlauch besonders belastbar. Diese Schlauchzwischenlage erstreckt sich mit ihrer Innenumfangswandung bis in die außenumfangsseitigen Einformungen der wendel- oder wellenförmigen Kontur der innenumfangsseitig benachbarten Schlauchschicht, so dass die Schlauchzwischenlage diese Einformungen ausfüllt. Auf diese Weise werden Lufteinschlüsse zwischen den benachbarten Schlauchschichten vermieden, die anderenfalls zu einer Schwächung des erfindungsgemäßen Wasserschlauches führen könnten. Die Schlauchzwischenlage hat eine im wesentlichen glattwandige Außenumfangswandung, so dass auf diese Schlauchumhüllung eine wendel- oder wellenförmige Verstärkung aufgeschoben werden kann, ohne dass sich die Oberflächenstrukturen der Verstärkung einerseits und die Oberflächenstrukturen am Schlauchaußenumfang der Schlauchseele andererseits behindern. Dabei ist die wendel- oder wellenförmige Verstärkung aus ästhetischen Gründen und/oder aus Stabilitätsgründen vorgesehen.

Ist zusätzlich oder stattdessen auch an der Schlauchumhüllung eine glattwandige Außenumfangswandung vorgesehen, werden die beispielsweise durch eine Wendel- oder Wellenstruktur gebildeten Einformungen am Außenumfang des erfindungsgemäßen Wasserschlauches vermieden, in denen sich andernfalls unerwünschte Verschmutzungen festsetzen könnten.

Der erfindungsgemäße Wasserschlauch ist besonders belastbar, wenn zwischen der Schlauchseele oder dergleichen Innenschlauch und der Schlauchumhüllung zumindest eine Schlauchzwischenlage vorgesehen ist.

Dabei sieht eine bevorzugte Ausführungsform gemäß der Erfindung vor, dass die Schlauchumhüllung und/oder die Schlauchzwischenlage eine im Wesentlichen glattwandige Außenumfangswandung hat. Weist die Schlauchzwischenlage eine glattwandige Außenumfangswandung auf, kann auf diese Schlauchumhüllung eine weitere wendel- oder wellenförmige Verstärkung aufgeschoben werden, ohne dass sich die Oberflächenstrukturen der Verstärkung einerseits und die Oberflächenstrukturen am Schlauchaußenumfang der Schlauchseele andererseits behindern.

Eine besonders stabile und belastbare Ausführungsform gemäß der Erfindung sieht vor, dass die Schlauchzwischenlage und/oder Schlauchumhüllung sich mit ihrer Innenumfangswandung bis in die außenumfangsseitige Einformung(en) der wendeloder wellenförmigen Kontur der innenumfangsseitig benachbarten Schlauchschicht erstreckt, so dass die Schlauchzwischenlage und/oder die Schlauchumhüllung diese Einformung(en) ausfüllt. Auf diese Weise werden Lufteinschlüsse zwischen den benachbarten Schlauchschichten vermieden, die andernfalls zu einer Schwächung des erfindungsgemäßen Wasserschlauches führen könnten.

Aus ästhetischen Gründen und/oder aus Stabilitätsgründen kann es zweckmäßig sein, wenn die Schlauchseele oder dergleichen Innenschlauch und vorzugsweise die zumindest eine Schlauchzwischenlage von einer wendel- oder wellenförmigen Verstärkung umhüllt ist.

Aus ästhetischen oder haptischen Gründen kann es vorteilhaft sein, wenn sich die am Schlauchaußenumfang des erfindungsgemäßen Wasserschlauches vorgesehene Schlauchumhüllung an eine innenumfangsseitig vorgesehene wendel- oder wellenförmige Verstärkung derart anschmiegt, dass diese wendel- oder wellenförmige Struktur der Verstärkung auch am Außenumfang des erfindungsgemäßen Wasserschlauches fühlbar ist.

Eine bevorzugte Ausführungsform gemäß der Erfindung, die begünstigt, dass der erfindungsgemäße Schlauch auch hohen hygienischen Ansprüchen genügt, sieht demgegenüber vor, dass die Schlauchumhüllung die Oberflächenstruktur des Innenschlauches und/oder zumindest einer dazwischen angeordneten wendel- oder wellenförmigen Verstärkung derart ausgleicht und/oder egalisiert, dass die Schlauchumhüllung eine glattwandige Außenumfangswandung hat.

Eine bevorzugte Ausführungsform gemäß der Erfindung sieht vor, dass zumindest eines der Schlauchbestandteile von Schlauchzwischenlage, Verstärkung oder Schlauchumhüllung aus einem PVC-freien Kunststoffmaterial hergestellt ist. Dabei wird eine Ausführung bevorzugt, bei der alle Schichten des erfindungsgemäßen Wasserschlauches aus PVC-freiem Material hergestellt sind.

Zusätzliche Ausgestaltungen der Erfindung sind in den weiteren Unteransprüchen aufgeführt. Nachstehend ist die Erfindung mit ihren wesentlichen Einzelheiten anhand der Zeichnung noch näher erläutert.

Es zeigt:
- Fig. 1: einen flexiblen Wasserschlauch in einem Längsschnitt, der einen Innenschlauch mit wellenförmiger Schlauchkontur aufweist und der eine den Schlauchaußenumfang bildende Schlauchumhüllung hat, welche die Kontur einer innenumfangsseitig benachbarten Verstärkung nachformt,
- Fig. 2: den Wasserschlauch aus Fig. 1 in einem Detail-Längsschnitt,
- Fig. 3: einen mit Fig. 1 und 2 vergleichbaren und ebenfalls in einem Längsschnitt dargestellten flexiblen Wasserschlauch, dessen Schlauchumhüllung jedoch eine glattwandige Außenumfangswandung hat, und
- Fig. 4: den Wasserschlauch aus Fig. 3 in einem Detail-Längsschnitt.

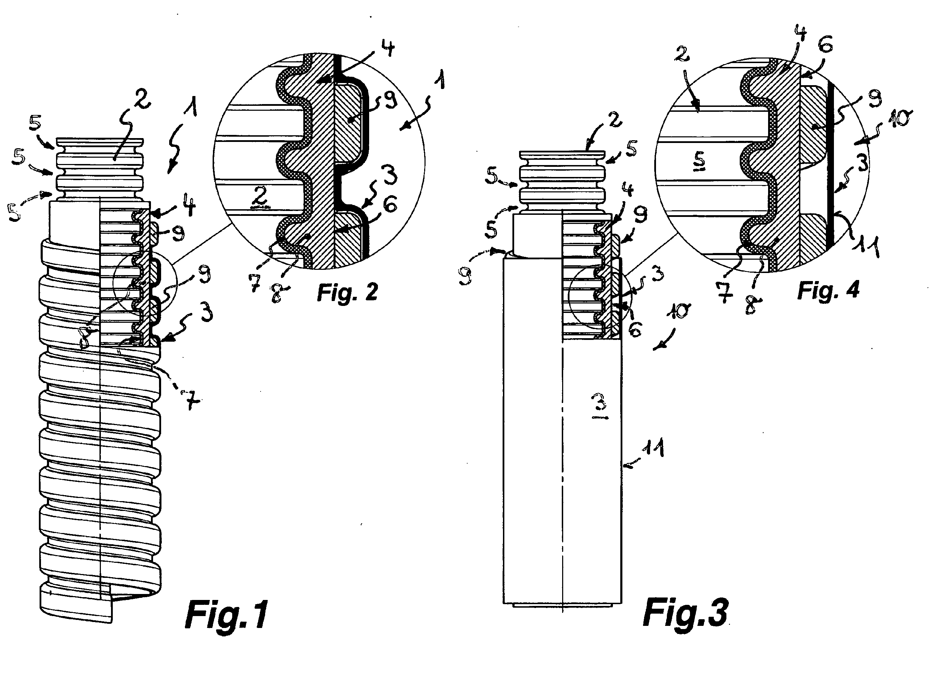

In den Fig. 1 bis 4 ist ein flexibler Wasserschlauch in zwei Ausführungen 1, 10 dargestellt. Die hier dargestellten Wasserschlauch-Ausführungen 1, 10 sind im Verlauf einer sanitären Wasser- oder Abwasserleitung als flexibler Leitungsabschnitt vorgesehen.

Die Wasserschläuche 1, 10 haben eine Schlauchseele oder dergleichen Innenschlauch 2, der in seinem Inneren den Wasserstrom zu führen hat. Der Innenschlauch 2, der aus einem PVC-freien Kunststoffmaterial hergestellt ist, weist eine wellenförmige Schlauchkontur auf, die die Flexibilität des Wasserschlauches 1, 10 begünstigt und einem unerwünschten Abknicken des Wasserschlauches 1, 10 entgegenwirkt.

Die Wasserschläuche 1, 10 weisen eine Schlauchumhüllung 3 auf, die den Schlauchaußenumfang des Wasserschlauches 1, 10 bildet. Zwischen dem Innenschlauch 2 und der Schlauchumhüllung 3 ist eine Schlauchzwischenlage 4 vorgesehen, die sich mit ihrer Innenumfangswandung bis in die außenumfangsseitigen Einformungen 5 des wellenförmig konturierten Innenschlauches 2 erstreckt, der relativ zur Schlauchzwischenlage 4 die innenumfangsseitig benachbarte Schlauchschicht bildet. In den Detail-Längsschnitten in Fig. 2 und 4 ist gut erkennbar, dass die Schlauchzwischenlage 4 die am Außenumfang des Innenschlauches 2 vorgesehenen Einformungen 5 ausfüllt, und dass die Schlauchzwischenlage 4 eine im Wesentlichen glattwandige Außenumfangswandung 6 hat.

Die Schlauchzwischenlage 4 kann - hier nicht dargestellt - zusätzlich zumindest eine Einlage beispielsweise aus Gewebe tragen, um axiale Kräfte besser aufnehmen zu können. Diese Einlagen können aus einzelnen Fäden und/oder einem Netzwerk bestehen. Dabei wird eine Vorzugslage der einzelnen Fäden bevorzugt, die in axialer Richtung verläuft.

Die Schlauchzwischenlage 4 ist von einer Verstärkungswendel 9 umgriffen, die hier eine wendelförmige Verstärkung 9 bildet. Da die Schlauchzwischenlage 4 eine glattwandige Außenumfangswandung 6 hat, können sich die Oberflächenstrukturen des Innenschlauches 2 einerseits und der Verstärkungswendel 9 andererseits nicht beeinträchtigen.

Aus einem Vergleich der Fig. 1 und 2 einerseits und der Fig. 3 und 4 andererseits wird deutlich, dass sich bei dem Wasserschlauch 1 gemäß den Fig. 1 und 2 die Schlauchumhüllung 3 derart an die Verstärkungswendel 9 anschmiegt, dass die Oberflächenstruktur der Verstärkungswendel 9 auch von außen noch sichtbar und fühlbar ist. Eine derart von außen fühlbare Oberflächenstruktur des Wasserschlauches 1 kann beispielsweise aus ästhetischen Gründen wünschenswert sein.

Demgegenüber wird bei dem Wasserschlauch 10 gemäß den Fig. 3 und 4 die Verstärkungswendel 9 derart von der Schlauchumhüllung 3 überzogen, dass die Schlauchumhüllung 3 und damit auch der Wasserschlauch 10 eine glattwandige Außenumfangswandung 11 hat.

Die Wasserschläuche 1, 10 sind aus PVC-freien Kunststoffmaterialien hergestellt. Dazu ist nicht nur der Innenschlauch 2, sondern darüber hinaus auch die Schlauchzwischenlage 4 und die Verstärkungswendel 9 und somit vorzugsweise alle Schlauchbestandteile aus PVC-freiem Kunststoffmaterial hergestellt. Als Material für den gewendelten oder gewellten Innenschlauch 2 kommt Polyethylen (PE), Polypropylen (PP), Polybuthylen (PB) oder andere PVC-freie, thermoplastische Elastomere sowie modifizierte Compounds dieser Grundwerkstoffe in Frage.

Da der gewendelte oder gewellte Innenschlauch 2 der hier dargestellten Wasserschläuche 1, 10 aus PVC-freiem Kunststoffmaterial hergestellt ist, kann auch hohen hygienischen Ansprüchen entsprochen werden. Der hohe hygienische Anspruch des erfindungsgemäßen Wasserschlauches ist auch dadurch begünstigt, dass der Außenumfang dieses Wasserschlauches 1, 10 durch eine Schlauchumhüllung 3 gebildet ist. Zwischen dem Innenschlauch 2 und der Schlauchumhüllung 3 kann bei Bedarf aus ästhetischen Gründen und/oder Stabilitätsgründen auch eine wendel- oder wellenförmige Verstärkung 9 vorgesehen sein. Trotz seiner hohen Belastbarkeit zeichnet sich der erfindungsgemäße Wasserschlauch durch seine hohe Flexibilität und seine kleinen Biegeradien aus, was insbesondere im Bereich sanitärer Anschlussfittings von Bedeutung sein kann. Zur Herstellung der hier dargestellten Wasserschläuche 1, 10 kann auch um den korrugierten Innenschlauch 2 die Schlauchumhüllung 3 überextrodiert werden, gegebenenfalls nachdem der Innenschlauch 2 mit der wendel- oder wellenförmigen Verstärkung 9 umwickelt wurde. Die Schlauchumhüllung 3 kann eine, die wendel- oder wellenförmige Struktur des Innenschlauches 2 beziehungsweise der Verstärkung 9 formnachvollziehende oder glättende Deckschicht bilden.

## Patentansprüche

1. Flexibler Wasserschlauch (1, 10) mit einer Schlauchseele oder dergleichen Innenschlauch (2), der aus einem PVC-freien Kunststoffmaterial hergestellt ist und der eine wendeloder wellenförmige Schlauchkontur hat, mit einer Schlauchumhüllung (3), welche den Schlauchaußenumfang des Wasserschlauches (1, 10) bildet, sowie mit zumindest einer Schlauchzwischenlage (4), die zwischen der Schlauchseele oder dergleichen Innenschlauch (2) und der Schlauchumhüllung (3) vorgesehen ist, wobei die zumindest eine Schlauchzwischenlage (4) sich mit ihrer Innenumfangswandung bis in die außenumfangsseitigen Einformungen der wendel- oder wellenförmigen Kontur der innenumfangsseitig benachbarten Schlauchschicht derart erstreckt, dass sie (4) die Einformungen ausfüllt, **dadurch gekennzeichnet, dass** die zumindest eine Schlauchzwischenlage (4) eine im wesentlichen glattwandige Außenumfangswandung hat, und dass die Schlauchseele oder dergleichen Innenschlauch (2) und die zumindest eine Schlauchzwischenlage (4) von einer wendeloder wellenförmigen Verstärkung (9) umhüllt ist, welche zwischen der zumindest einen Schlauchzwischenlage (4) und der Schlauchumhüllung (3) vorgesehen ist.

2. Wasserschlauch nach Anspruch 1, **dadurch gekennzeichnet, dass** die Schlauchzwischenlage (4) zumindest eine Einlage zur Aufnahme axialer Kräfte trägt, und dass diese zumindest eine Einlage aus einzelnen Fäden und/oder einem Netzwerk besteht.

3. Wasserschlauch nach Anspruch 2, **dadurch gekennzeichnet, dass** die die zumindest eine Einlage bildenden Einzelfäden in axialer Richtung orientiert sind.

4. Wasserschlauch nach einem der Ansprüche 1 bis 3, **dadurch gekennzeichnet, dass** zumindest eines der Schlauchbestandteile von Schlauchzwischenlage (4), Verstärkung (9) oder Schlauchumhüllung (3) aus einem PVC-freien Kunststoffmaterial hergestellt ist.

5. Wasserschlauch nach einem der Ansprüche 1 bis 4, **dadurch gekennzeichnet, dass** die Schlauchumhüllung (3) die Oberflächenstruktur des Innenschlauches (2) und/oder zumindest einer dazwischen angeordneten wendel- oder wellenförmigen Verstärkung (9) ausgleicht und/oder egalisiert.

## Claims

1. Flexible water hose (1, 10) with a hose core or with similar inner hose (2) which is produced from a PVC-free plastics material and which has a helical or wavy hose contour, with a hose sheathing (3) which forms the hose outer circumference of the water hose (1, 10), and with at least one hose intermediate layer (4) which is provided between the hose core or similar inner hose (2) and the hose sheathing (3), wherein the at least one hose intermediate layer (4) extends with its inner circumferential wall into the externally circumferential indentations of the helical or wavy contour of the internally circumferentially adjacent hose layer in such a way that it (4) fills the indentations, **characterized in that** the at least one hose intermediate layer (4) has a substantially smoothwalled outer circumferential wall, and **in that** the hose core or similar inner hose (2) and the at least one hose intermediate layer (4) are sheathed by a helical or wavy reinforcement (9) which is provided between the at least one hose intermediate layer (4) and the hose sheathing (3).

2. Water hose according to Claim 1, **characterized in that** the hose intermediate layer (4) bears at least one insert for absorbing axial forces, and **in that** this at least one insert consists of individual threads and/or a network.

3. Water hose according to Claim 2, **characterized in that** the individual threads forming the at least one insert are oriented in the axial direction.

4. Water hose according to one of Claims 1 to 3, **characterized in that** at least one of the hose constituent parts of hose intermediate layer (4), reinforcement (9) or hose sheathing (3) is produced from a PVC-free plastics material.

5. Water hose according to one of Claims 1 to 4, **characterized in that** the hose sheathing (3) compensates for and/or equalizes the surface structure of the inner hose (2) and/or at least one helical or wavy reinforcement (9) arranged in between.

## Revendications

1. Flexible à eau (1, 10) comprenant une âme ou un tuyau souple intérieur (2) similaire, fabriqué(e) en une matière plastique exempte de PVC et pourvu(e) d'un profil hélicoïdal ou ondulé ; un gainage (3) formant le pourtour extérieur dudit flexible à eau (1, 10) ; ainsi qu'au moins une couche intermédiaire (4) prévue entre ledit gainage (3) du flexible et l'âme ou le tuyau souple intérieur similaire (2) dudit flexible, ladite couche intermédiaire (4) à présence minimale s'insinuant, par la paroi de son pourtour intérieur, jusque dans les empreintes rentrantes situées sur le pourtour extérieur du profil hélicoïdal ou ondulé de la couche dudit flexible qui occupe une position voisine sur le pourtour intérieur, de façon telle que ladite couche (4) comble intégralement lesdites empreintes rentrantes, **caractérisé par le fait que** la couche intermédiaire (4) du flexible, à présence minimale, comporte une paroi de pourtour extérieur sensiblement lisse ; et **par le fait que** l'âme ou le tuyau souple intérieur similaire (2) du flexible et ladite couche intermédiaire (4) dudit flexible, à présence minimale, sont ceinturés par un renfort (9) hélicoïdal ou ondulé, prévu entre le gainage (3) dudit flexible et ladite couche intermédiaire (4) dudit flexible, à présence minimale.

2. Flexible à eau selon la revendication 1, **caractérisé par le fait que** la couche intermédiaire (4) dudit flexible porte au moins une structure intégrée, en vue d'absorber des forces axiales ; et **par le fait que** cette structure intégrée, à présence minimale, est constituée de fils individuels et/ou d'une configuration réticulée.

3. Flexible à eau selon la revendication 2, **caractérisé par le fait que** les fils individuels, constituant la structure intégrée à présence minimale, sont orientés dans la direction axiale.

4. Flexible à eau selon l'une des revendications 1 à 3, **caractérisé par le fait qu'**au moins l'un des éléments constitutifs dudit flexible, matérialisés par la couche intermédiaire (4) dudit flexible, par le renfort (9) ou par le gainage (3) dudit flexible, est fabriqué en une matière plastique exempte de PVC.

5. Flexible à eau selon l'une des revendications 1 à 4, **caractérisé par le fait que** le gainage (3) dudit flexible compense et/ou uniformise la structure de la surface du tuyau souple intérieur (2) et/ou d'au moins un renfort (9) hélicoïdal ou ondulé, occupant une position intercalaire.
